Europäisches Patentamt

**European Patent Office**

**Office européen des brevets**

(19)

(11) Numéro de publication : **0 148 068
B1**

(12)

# FASCICULE DE BREVET EUROPÉEN

(45) Date de publication du fascicule du brevet :
04.03.87

(51) Int. Cl.⁴ : **C 08 L 61/06**, C 08 G 14/06 //
(C08L61/06, C08K5:18)

(21) Numéro de dépôt : **84402589.0**

(22) Date de dépôt : **14.12.84**

(54) **Procédé de durcissement de résines phénoliques.**

(30) Priorité : **30.12.83 FR 8321058**

(43) Date de publication de la demande :
**10.07.85 Bulletin 85/28**

(45) Mention de la délivrance du brevet :
**04.03.87 Bulletin 87/10**

(84) Etats contractants désignés :
**AT BE CH DE GB IT LI LU NL SE**

(56) Documents cités :
**NL-A- 301 407
US-A- 3 476 706
CHEMICAL ABSTRACTS, vol. 81, 12 août 1974, page
55, réf. no. 26637k, Columbus, Ohio, US;**

(73) Titulaire : **Société Chimique des Charbonnages S.A.
Tour Aurore Place des Reflets
F-92080 Paris La Défense 2 Cédex 5 (FR)**

(72) Inventeur : **Cousin, Michel
81, bld Wattiez
F-62218 Loison Sous Lens (FR)**
Inventeur : **Meyer, Nicolas
12, rue des Déportés
F-62300 Lens (FR)**

(74) Mandataire : **Rieux, Michel et al
C d F Chimie S.A. Service Propriété Industrielle Tour
Aurore Place des Reflets Cédex no. 5
F-92080 Paris la Défense 2 (FR)**

# 0 148 068

## Description

La présente invention concerne un nouveau procédé de durcissement de résines phénoliques. Elle a plus particulièrement pour objet un procédé de durcissement de résols formo-phénoliques.

Il est connu de durcir les résols phénoliques par addition d'acides forts. Comme acides, on emploie par exemple l'acide chlorhydrique, l'acide sulfurique, l'acide phosphorique, l'acide trichloracétique, des acides sulfoniques, ces différents acides étant utilisés seuls ou en mélanges. Le plus souvent, ces acides sont mis en œuvre sous forme de solutions aqueuses à des concentrations variant entre 20 et 70 %.

Pour certaines applications, les résines phénoliques sont durcies en présence de renforts. Le renfort utilisé est à l'état de fibres telles que fibres cellulosiques ou de verre, de non-tissé par exemple en polyester de haut poids moléculaire, en chlorure de polyvinyle, de mat de verre ou de tissu par exemple en polyamide aromatique, en verre ou en amiante. Après durcissement de la résine phénolique le matériau mixte obtenu est ensuite duci à une température en général voisine de 90 °C.

Dans la fabrication de certains matériaux mixtes, il est parfois indispensable de pouvoir augmenter la durée de vie en pot à température ambiante de la résine phénolique mais aussi de permettre une vitesse de durcissement élevée de la résine lorsque le matériau mixte est durci à chaud. On voit donc qu'il existe pratiquement deux problèmes antagonistes à résoudre. En effet d'un côté, la résine ne doit pas durcir trop rapidement à froid mais de l'autre, il est nécessaire qu'elle conserve un potentiel de durcissement suffisant pour pouvoir être rapidement réticulée à chaud.

Comme exemples de matériaux mixtes pour lesquels il est nécessaire de résoudre les problèmes évoqués ci-dessus, on peut citer la fabrication des préimprégnés phénoliques, la fabrication des matériaux phénoliques préparés par enroulement filamentaire et la fabrication de pièces par la technique de « pultrusion », technique consistant à réaliser une traction sur le produit fini en le faisant passer à travers une filière.

Les appareils utilisés pour la fabrication des matériaux préparés par enroulement filamentaire sont schématiquement constitués d'un bac d'imprégnation contenant la résine phénolique et son durcisseur dans lequel les fibres de verre sont imprégnées. Après imprégnation, les fibres sont essorées puis bobinées autour d'un mandrin avant d'être durcies en étuve à une température comprise entre 60 et 90 °C. Les techniques mettant en œuvre la pultrusion consistent à imprégner des renforts à l'aide de résines. Cette imprégnation est réalisée dans des bacs d'imprégnation dans lesquels se trouvent la résine additionnée de son catalyseur de durcissement. L'imprégnation est suivie d'une étape de chauffage qui permet de réaliser la polymérisation de la résine puis d'une étape d'étirage à l'aide d'une filière chauffée dans laquelle la polymérisation de la résine se poursuit. Eventuellement, l'étape de chauffage peut être conduite après le passage dans la filière. Les renforts utilisés pour la mise en œuvre de la technique de la pultrusion sont constitués de rovings de fibres de verre. Les résines phénoliques conviennent particulièrement pour la mise en œuvre de la technique de pultrusion. Que ce soit la fabrication de matériaux par la technique de l'enroulement filamentaire ou par la technique de pultrusion, on voit donc qu'il est indispensable que la résine phénolique ne durcisse pas trop rapidement dans les bacs d'imprégnation maintenus à température ambiante, afin d'éviter de perdre des quantités importantes de résines. Par ailleurs, il est aussi nécessaire et avantageux que la résine phénolique après imprégnation des fibres puisse durcir à chaud et ce rapidement afin que le matériau obtenu occupe l'étuve un minimum de temps.

Pour résoudre ces problèmes, on peut diminuer la concentration de la solution du durcisseur acide et utiliser des solutions aqueuses qui présentent une concentration en acide inférieure à 20 %. Dans ce cas, on entraîne des quantités importantes d'eau qui augmentent effectivement la durée de vie en pot à température ambiante mais présentent les inconvénients de diminuer la vitesse de durcissement à chaud et de provoquer des imperfections dans les produits finis sous la forme de cloques et de micropiqûres. On a aussi proposé de substituer totalement l'eau par des solvants organiques pour obtenir ainsi des solutions diluées d'acide, dans ce cas, comme pour les solutions aqueuses on observe aussi effectivement une augmentation de la durée de vie en pot à température ambiante mais aussi une diminution de la vitesse de durcissement à chaud ; par ailleurs, on constate que des quantités trop importantes de solvants se retrouvent dans les produits finis et provoquent en particulier un amoindrissement des propriétés mécaniques de ces produits, ce qui se manifeste le plus souvent par des fissurations. En outre, la mise en œuvre de ces solvants pose des problèmes de stockage et de toxicité qui ne peuvent être résolus que par l'utilisation d'appareils d'extraction coûteux. Economiquement, on n'a donc pas intérêt à utiliser des durcisseurs riches en solvants organiques.

On cherche donc à obtenir des résines additionnées de leur catalyseur de durcissement qui présentent à température ambiante, une durée de vie en pot élevée tout en conservant intacte la possibilité de durcir rapidement à chaud.

La présente invention concerne un procédé de durcissement de résines phénoliques selon lequel on réalise le durcissement des résines à l'aide de solutions d'eau et/ou de solvants organiques d'un acide sulfonique aromatique, d'acide sulfurique concentré, caractérisé en ce que le durcissement est réalisé en présence d'aniline préalablement additionnée à la résine phénolique.

Selon une autre caractéristique importante du procédé de l'invention, la quantité d'aniline mise en

2

œuvre est comprise entre 0,5 et 2 % par rapport au poids de la résine phénolique et de préférence entre 0,8 et 1,5 %. En-dessous de 0,5 % on n'observe aucun effet sur la vie en pot à température ambiante et sur la vitesse de durcissement à chaud de la résine contenant le durcisseur. Au-delà de 2 % en poids, on a constaté que le taux d'aniline libre n'est plus tolérable en ce qui concerne la toxicité de la résine. De plus, pour des quantités d'aniline plus élevées on constate que le résol catalysé conduit à un gel qui ne durcit pas lorsqu'il est chauffé pour parachever le durcissement.

La mise en œuvre du procédé de l'invention permet d'ajuster soigneusement les durées de vie en pot et les vitesses de durcissement à chaud des résines additionnées de leur catalyseur de durcissement. De façon surprenante, on a trouvé que l'aniline utilisée dans les limites revendiquées selon l'invention non seulement avait un effet positif sur les caractéristiques précitées des résines phénoliques mais en plus qu'elle se retrouvait, après addition dans la résine, sous forme libre dans des limites tolérables du point de vue de la toxicologie. Tout se passe comme si l'aniline se combinait avec les produits présents dans le résol, tout en n'ayant aucun effet négatif sur la réactivité de ces résols. Etant donné que les résols contiennent du formol libre, on aurait pu penser que les produits d'addition de formol et d'aniline préparés au préalable et additionnés ensuite au résol auraient le même effet que l'aniline ajoutée au résol selon le procédé de l'invention. Mais il n'en est rien : on a en effet constaté que les produits d'addition de formol et d'aniline préparés préalablement puis ajoutés au résol sont insolubles dans ce dernier.

Selon une caractéristique importante du procédé de l'invention, l'aniline est donc ajoutée à la résine phénolique non pas au moment de son emploi c'est-à-dire juste avant d'être catalysée à l'aide de catalyseurs de durcissement mais elle est ajoutée avant commercialisation. On a en effet trouvé de manière surprenante que l'aniline ajoutée de cette façon avait un effet bénéfique sur la durée de vie en pot à température ambiante et aussi sur le durcissement à chaud à l'aide de catalyseurs classiques.

Par ailleurs, on aurait pu penser que le procédé de l'invention conduisant à de très bons résultats avec l'aniline qui est un produit chimique à fonction amine pouvait être étendu aux amines linéaires ou d'autres amines aromatiques. De façon étonnante, il a été constaté que les amines telles que la diéthylamine, la méthyléthylaniline, les polyamines n'avaient pas d'action sur les résols car elles ne sont pas compatibles avec eux du point de vue miscibilité, ou comme la diéthylaniline n'ont qu'une action très limitée.

De façon connue, le durcissement des résines phénoliques est réalisé à l'aide de catalyseurs constitués d'un acide et de solvant organique. De façon non limitative, on peut citer les acides paratoluène sulfonique, orthotoluène sulfonique, benzène sulfonique et xylène sulfonique. Comme solvants organiques, on entend les composés à fonction alcool : méthanol, éthanol, propanol, isopropanol, ainsi que les polyols comme le glycérol, le dipropylèneglycol et le triéthylèneglycol.

Les quantités de durcisseur utilisées sont celles employées classiquement pour le durcissement des résols. Ces quantités sont comprises entre 4 et 25 % en poids par rapport au poids du résol et de préférence entre 6 et 12 %. Les résols utilisés sont les résols connus préparés par condensation de formol sur le phénol en présence d'un catalyseur alcalin. Ils présentent un rapport molaire F/P compris entre 1,5 et 2,5 et peuvent éventuellement contenir des additifs tels que plastifiants, tensio-actifs, charges.

Le procédé de durcissement de la présente demande convient parfaitement dans certains procédés de fabrication de préimprégnés phénoliques ainsi que dans des procédés de fabrication de matériaux mixtes mettant en œuvre un appareillage où la résine phénolique additionnée de son catalyseur de durcissement est stockée dans une cuve dans laquelle défilent en permanence des fibres de verre qui sont ainsi imprégnées de résine phénolique. De manière générale, le procédé de l'invention convient dans toutes les techniques où il est nécessaire que la résine phénolique ait une durée de vie en pot allongée, mais soit également rapidement durcissable à chaud.

Les exemples suivants illustrent la présente invention.

## Exemple 1

On a mélangé dans un tambour tournant de la résine formophénolique ayant un rapport molaire F/P de 1,5 avec des quantités variables d'aniline, on a ajouté 8 % d'un durcisseur constitué par de l'acide paratoluène sulfonique en solution à 60 % dans l'eau, on a obtenu les résultats suivants :

| Aniline % en poids | Temps de gel à 20 °C (minutes) |
|---|---|
| 0 | 8 |
| 1 | 18 |
| 1,2 | 20 |
| 1,5 | 23 |

## Exemple 2

L'exemple 1 est répété en utilisant un résol de rapport molaire F/P identique mais qui présente une réactivité de 80 °C au lieu de 110 °C. La réactivité est définie par le pic exothermique d'un mélange constitué de 100 parties de résine et d'une solution d'acide sulfurique à 50 %. On obtient les résultats suivants en mettant en œuvre 10 % en poids de catalyseur constitué d'une solution de 50 % d'acide sulfonique, 5 % d'acide phosphorique et le reste d'eau.

| ANILINE % EN POIDS | TEMPS DE GEL A 20°C (minutes) | REACTIVITE A CHAUD Température °C | Pic (minutes) |
|---|---|---|---|
| 0 | 10 | 116°C | 14 |
| 1 | 21 | 120°C | 29 |
| 2 | 40 | 104°C | 40 |
| 3 | Après 4 H gel très tendre | 40°C | |

On constate donc que pour des taux d'aniline élevés soit 3 %, il n'y a pas formation de gel tendre à température ambiante. Si on veut donc réaliser une cuisson de cette résine, il sera donc nécessaire de chauffer très longtemps pour obtenir le durcissement de la résine ce qui est industriellement rédhibitoire.

Exemple 3

L'exemple 1 est répété mais en mettant en œuvre une résine phénolique ayant un rapport molaire F/P. de 2. La résine est ensuite durcie à l'aide de 15 % en poids du même catalyseur utilisé dans l'exemple 2. Le tableau suivant indique les résultats obtenus :

| ANILINE % EN POIDS | CATALYSEUR % EN POIDS | TEMPS GEL A 20°C (minutes) | REACTIVITE A CHAUD Température (°C) | Pic (minutes) |
|---|---|---|---|---|
| 0 | 15 | 12 | 92 | 17 |
| 1 | 15 | 25 | 70 | 32 |

Exemple 4 (comparatif)

On met en œuvre une résine phénolique de rapport molaire F/P de 1,5. On ajoute différentes quantités d'aniline et de diéthylaniline dans le résol. La résine est catalysée à l'aide de 10 % en poids du catalyseur utilisé dans l'exemple 2. Le tableau suivant résume les résultats obtenus.

(Voir Tableau p. 5)

4

0 148 068

| ANILINE % EN POIDS | DIETHYL-ANILINE | TEMPS DE GEL A 20°C (minutes) | REACTIVITE A CHAUD | |
| --- | --- | --- | --- | --- |
| | | | Température (°C) | Pic (minutes) |
| 0 | | 10 | 116 | 14 |
| 1 | | 21 | 120 | 29 |
| 2 | | 40 | 104 | 50 |
| | 1 | 14 | 126 | 20 |
| | 2 | 25 | 115 | 35 |

On constate que la diéthylaniline a une efficacité plus faible que l'aniline. Par ailleurs, lors du chauffage de la résine une odeur désagréable se dégage avec la diéthylaniline.

Exemple 5 (comparatif)

Au lieu d'ajouter l'aniline directement dans le résol comme réalisé selon la présente invention, on a préparé préalablement un produit d'addition de formol et d'aniline que l'on a ensuite ajouté au résol. Ce produit intermédiaire est fabriqué par addition de 46,5 g d'aniline (0,5 mole) à 50 g d'une solution de formol à 30 % (0,5 mole). On observe alors une réaction exothermique qui conduit à un produit visqueux auquel on additionne du dipropylèneglycol. Le produit obtenu est insoluble dans l'eau et également insoluble dans le résol et dans le dipropylèneglycol.

**Revendications**

1. Procédé de durcissement de résines phénoliques, selon lequel on réalise le durcissement des résines à l'aide de solution d'eau et/ou de solvants organiques, d'un acide sulfonique aromatique, d'acide sulfurique concentré, caractérisé en ce que le durcissement est réalisé en présence d'aniline préalablement additionnée à la résine phénolique en quantité comprise entre 0,5 et 2 %, par rapport au poids de la résine phénolique.
2. Procédé selon la revendication 1 caractérisé en ce que la quantité d'aniline mise en œuvre est comprise entre 0,8 et 1,5 % par rapport au poids de la résine phénolique.

**Claims**

1. A process for hardening phenolic resins, according to which the hardening of the resins is carried out using a solution of water and/or organic solvents, aromatic sulphonic acid and concentrated sulphuric acid, characterised in that the hardening is carried out in the presence of aniline added previously to the phenolic resin in a quantity of between 0.5 and 2 % relative to the weight of the phenolic resin.
2. A process according to claim 1, characterised in that the quantity of aniline used is between 0.8 and 1.5 % relative to the weight of the phenolic resin.

**Patentansprüche**

1. Verfahren zum Härten von Phenolharzen, bei welchem das Härten der Harze mit Hilfe einer Lösung

5

einer aromatischen Sulfonsäure, einer konzentrierten Schwefelsäure in Wasser und/oder in organischen Lösungsmitteln durchgeführt wird, dadurch gekennzeichnet, daß man das Härten in Gegenwart von Anilin durchführt, das vorher dem Phenolharz in einer Menge zwischen 0,5 und 2 % bezogen auf das Gewicht des phenolharzes, zugegeben wurde.

2. Verfahren nach Anspruch 1, dadurch gekennzeichnet, daß die eingesetzte Menge des Anilins zwischen 0,8 und 1,5 % bezogen auf das Gewicht des Phenolharzes, beträgt.